# EUROPEAN PATENT APPLICATION

(11) **EP 4 296 962 A1**
(43) Date of publication of application: **27.12.2023**
(21) Application number: 22756043.0
(22) Date of filing: 09.02.2022
(51) Int. Cl.: G06T 15/20, G06T 19/00

(54) **INFORMATION PROCESSING DEVICE, INFORMATION PROCESSING METHOD, AND PROGRAM**

(30) Priority: 18.02.2021 JP 2021024136
(71) Applicant: CANON KABUSHIKI KAISHA, Tokyo 146-8501 (JP)
(72) Inventor: MAEDA Mitsuru, Tokyo 146-8501 (JP); FUNAKI Hinako, Tokyo 146-8501 (JP); OKABE Koji, Tokyo 146-8501 (JP); KAMEI Hidekazu, Tokyo 146-8501 (JP); OTA Yuya, Tokyo 146-8501 (JP); ONUMA Kazufumi, Tokyo 146-8501 (JP); OGASAWARA Taku, Tokyo 146-8501 (JP)
(74) Representative: Canon Europe Limited
(86) International application number: PCT/JP2022/004994
(87) International publication number: WO 2022/176722

(57) **Abstract**

An information processing apparatus 100 includes an acquisition unit 105 configured to acquire material data that is to be used for generation of a virtual viewpoint image that is based on a plurality of captured images obtained by a plurality of cameras 101 performing image capturing of a subject, and is material data represented by a first format, a conversion unit 107 configured to convert, based on information for identifying a format of material data processable by a different apparatus being an output destination of the material data, a format of the acquired material data from the first format into a second format, and a transmission/reception unit 108 configured to output the material data converted into the second format, to the different apparatus.

## Description

### Technical Field

The present disclosure relates to a technique of generating a virtual viewpoint image.

### Background Art

In recent years, attention has been directed toward a technique of performing image capturing of a subject using a plurality of imaging apparatuses arranged around an image capturing region, and generating an image (virtual viewpoint image) viewed from a designated viewpoint (virtual viewpoint), using a plurality of captured images acquired from the imaging apparatuses. Because this technique enables a user to view a highlight scene of soccer or basketball, for example, from various angles, this technique can cause the user to feel a high sense of realism as compared with a normal image.

Patent Literature 1 discusses a system that generates point cloud data including a plurality of points indicating three-dimensional positions, as three-dimensional shape data indicating the shape of a subject. In addition, the system discussed in Patent Literature 1 generates an image (virtual viewpoint image) viewed from an arbitrary viewpoint, by performing rendering processing using the generated point cloud data.

Patent Literature 2 discusses a technique of restoring, based on information acquired by an RGB-D camera, a three-dimensional model of a wide range including not only a front region of an object but also a side region. According to Patent Literature 2, an object region is extracted based on depth data of a depth map, and a three-dimensional surface model of an object is generated based on the depth data. In addition, according to Patent Literature 2, by performing rendering processing utilizing a three-dimensional mesh model generated using the three-dimensional surface model, a virtual viewpoint image is generated.

### Citation List

### Patent Literature

PTL 1: International Patent Publication No. WO 2018/147329
PTL 2: Japanese Patent Application Laid-Open No. 2016-71645

### Summary of Invention

### Technical Problem

As described above, a plurality of virtual viewpoint image generation methods exist, and data to be used in each generation method varies. Accordingly, in a case where data output to an apparatus that executes processing related to the generation of a virtual viewpoint image is data unsupported by the output destination apparatus, processing might fail to be appropriately executed.

The present disclosure has been devised in view of the above-described issues. The object of the present disclosure is to enable output of material data related to the generation of a virtual viewpoint image that is processable by an output destination apparatus of the data.

### Solution to Problem

An information processing apparatus according to the present disclosure includes an acquisition unit configured to acquire material data that is to be used for generation of a virtual viewpoint image that is based on a plurality of captured images obtained by a plurality of imaging apparatuses performing image capturing of a subject, and is material data represented by a first format, a conversion unit configured to convert, based on information for identifying a format of material data processable by a different apparatus being an output destination of the material data, a format of the material data acquired by the acquisition unit, from the first format into a second format, and an output unit configured to output the material data converted into the second format by the conversion unit, to the different apparatus.

### Advantageous Effects of Invention

According to the present disclosure, it becomes possible to output material data related to the generation of a virtual viewpoint image that is processable by an output destination apparatus of the data.

### Brief Description of Drawings

[Fig. 1] Fig. 1 is a block diagram illustrating a hardware configuration example of an information processing apparatus.
[Fig. 2] Fig. 2 is a diagram illustrating an example of a configuration of a virtual viewpoint image generation system including an information processing apparatus according to a first exemplary embodiment.
[Figs. 3A to 3E] Figs. 3A to 3E illustrate an example of a data structure of material data to be stored into a storage unit.
[Figs. 4A to 4C] Figs. 4A to 4C illustrate an example of a data structure of material data to be stored into the storage unit.
[Figs. 5A to 5B] Figs. 5A to 5B illustrate an example of a data structure of material data to be stored into the storage unit.
[Figs. 6A to 6B] Figs. 6A to 6B illustrate an example of a data structure of material data to be stored into the storage unit.
[Figs. 7A to 7C] Figs. 7A to 7C illustrate an example of a data structure of material data to be stored into the storage unit.
[Figs. 8A to 8B] Figs. 8A to 8B illustrate an example of a data structure of material data to be stored into the storage unit.
[Figs. 9A to 9B] Figs. 9A to 9B illustrate an example of a data structure of material data to be stored into the storage unit.
[Fig. 10A] Fig. 10A illustrates an example of information for identifying conversion processing.
[Fig. 10B] Fig. 10B illustrates an example of information for identifying conversion processing.
[Fig. 11] Fig. 11 is a flowchart illustrating an example of processing to be performed by the virtual viewpoint image generation system according to the first exemplary embodiment.
[Fig. 12] Fig. 12 illustrates an example of a data structure of material data to be stored into the storage unit.
[Fig. 13] Fig. 13 illustrates an example of a data structure of material data to be stored into the storage unit.
[Fig. 14A] Fig. 14A illustrates an example of a data structure of material data to be stored into the storage unit.
[Fig. 14B] Fig. 14B illustrates an example of a data structure of material data to be stored into the storage unit.
[Fig. 14C] Fig. 14C illustrates an example of a data structure of material data to be stored into the storage unit.
[Fig. 15] Fig. 15 illustrates an example of a data structure of material data to be stored into the storage unit.
[Fig. 16] Fig. 16 illustrates an example of a data structure of material data to be stored into the storage unit.
[Fig. 17] Fig. 17 is a diagram illustrating an example of a configuration of a virtual viewpoint image generation system including an information processing apparatus according to a second exemplary embodiment.
[Fig. 18] Fig. 18 is a flowchart illustrating an example of processing to be performed by the virtual viewpoint image generation system according to the second exemplary embodiment.

### Description of Embodiments

Hereinafter, exemplary embodiments of the present disclosure will be described with reference to the drawings. The components to be described in the following exemplary embodiment merely indicate an example of an exemplary embodiment, and are not intended to limit the present disclosure to these.

### (First Exemplary Embodiment)

In the present exemplary embodiment, the description will be given of an information processing apparatus that outputs, to a display device, data (hereinafter, will be referred to as material data) to be used for the generation of a virtual viewpoint image that is based on a plurality of captured images obtained by a plurality of imaging apparatuses performing image capturing of a subject.

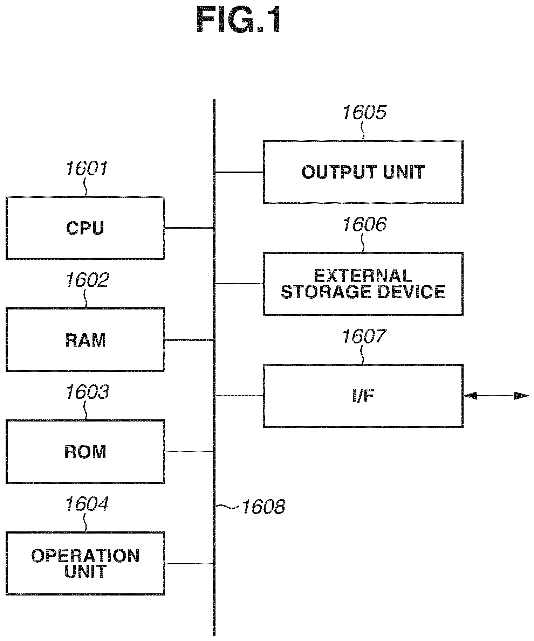

Fig. 1 is a block diagram illustrating a configuration example of hardware of a computer applicable to the information processing apparatus according to the present exemplary embodiment. The information processing apparatus includes a central processing unit (CPU) 1601, a random access memory (RAM) 1602, a read-only memory (ROM) 1603, an operation unit 1604, an output unit 1605, an external storage device 1606, an interface (I/F) 1607, and a bus 1608. The hardware configuration illustrated in Fig. 1 is applicable to any apparatus included in a virtual viewpoint image generation system to be described below.

The CPU 1601 controls the entire computer using computer programs and data that are stored in the RAM 1602 and the ROM 1603. The RAM 1602 includes an area for temporarily storing computer programs and data loaded from the external storage device 806, data acquired from the outside via the I/F 1607, and the like. Furthermore, the RAM 1602 includes a work area to be used when the CPU 1601 executes various types of processing. In other words, the RAM 1602 can be allocated as a frame memory, or appropriately provide other various areas, for example.

The ROM 1603 stores setting data of this apparatus, boot programs, and the like. The operation unit 1604 includes input devices such as a keyboard, a mouse, and a joystick. Based on user operations performed using these input devices, various instructions can be input to the CPU 1601. The output unit 1605 outputs a processing result obtained by the CPU 1601. The output unit 1605 includes a liquid crystal display or the like, for example.

The external storage device 1606 can be an information storage device represented by a hard disc drive device. The external storage device 1606 stores an operating system (OS) and a computer program for causing the CPU 1601 to implement the function of each processing unit included in an apparatus according to the present exemplary embodiment. In accordance with the control executed by the CPU 1601, computer programs and data that are stored in the external storage device 1606 are appropriately loaded onto a RAM 802 to be processed by the CPU 1601. Furthermore, the external storage device 1606 may store each piece of image data to be processed and various types of information to be used in processing.

A network such as a local area network (LAN) or the Internet, and other devices such as a projection device and a display device can be connected to the I/F 1607. This computer can acquire and transmit various types of information via the I/F 1607. For example, in a case where an information processing apparatus 200 is connected with an external apparatus in a wired manner, a cable for communication is connected to the communication I/F 1607. In a case where the information processing apparatus includes a function of wirelessly communicating with an external apparatus, the communication I/F 1607 includes an antenna. The bus 1608 is a bus for connecting the above-described components.

At least any of the above-described components may be connected to the outside of an information processing apparatus as a different apparatus. The same applies to all apparatuses included in the virtual viewpoint image generation system to be described below.

### <Configuration of Virtual Viewpoint Image Generation System>

Next, a configuration of the virtual viewpoint image generation system according to the present exemplary embodiment will be described. A virtual viewpoint image according to the present exemplary embodiment is also called a free viewpoint image, but the virtual viewpoint image is not limited to an image corresponding to a viewpoint freely (arbitrarily) designated by the user. For example, an image corresponding to a viewpoint selected by the user from among a plurality of candidates, and the like are also included in virtual viewpoint images. In the present exemplary embodiment, the description will be mainly given of a case where the designation of a virtual viewpoint is performed based on a user operation, but the designation of a virtual viewpoint may be automatically performed based on a result of image analysis, or the like. In addition, in the present exemplary embodiment, the description will be mainly given of a case where a virtual viewpoint image is a moving image, but a virtual viewpoint image may be a still image.

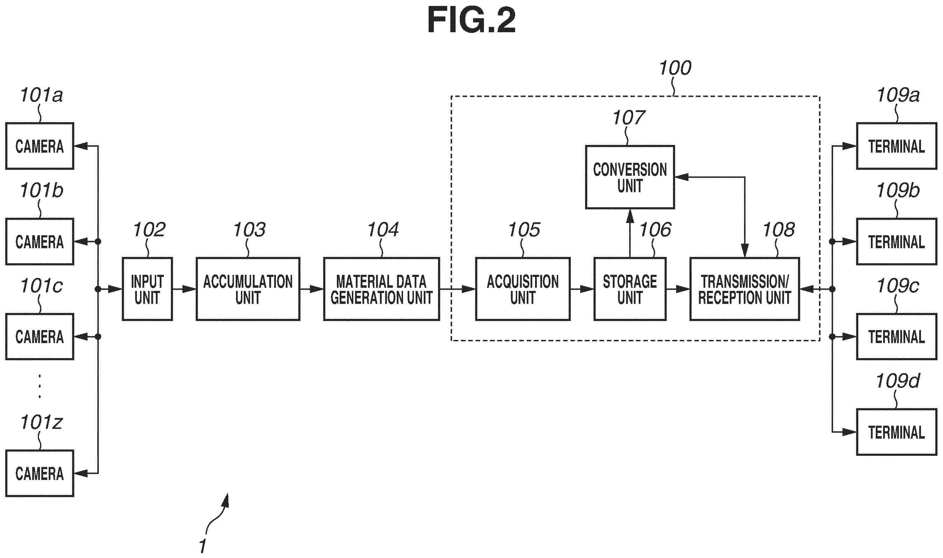

Fig. 2 is a diagram illustrating a configuration of a virtual viewpoint image generation system 1. The virtual viewpoint image generation system 1 performs image capturing of a subject using a plurality of imaging apparatuses installed in a facility such as a playing field (stadium) or a concert hall, for example, and generates data (material data) for generating a virtual viewpoint image, based on a plurality of obtained captured images. The virtual viewpoint image generation system 1 includes cameras 101a to 101z, an input unit 102, an accumulation unit 103, a material data generation unit 104, an information processing apparatus 100, and terminals 109a to 109d. A functional configuration of the information processing apparatus 100 will be described below.

The cameras 101a to 101z are arranged in such a manner as to surround a subject, and image capturing is synchronously performed. Nevertheless, the number of cameras is not limited to the number illustrated in Fig. 2. The cameras 101a to 101z are connected via a network, and connected to the input unit 102. The cameras 101a to 101z synchronously perform image capturing. In other words, frames of captured images captured by the cameras 101a to 101z are acquired at equal times. Time information regarding an image capturing time, and a frame number are allocated to an acquired captured image, and the captured image is transmitted to the input unit 102. The time information in an arbitrary format can be used. In addition, a camera ID is allocated to each camera, and information regarding a camera ID is allocated to a captured image acquired by a corresponding camera. In the following description, the cameras 101a to 101z will be simply described as cameras 101 in a case where there is no reason to distinguish the cameras 101a to 101z from each other.

The input unit 102 inputs image data obtained by image capturing performed by the cameras 101a to 101z, and outputs the image data to the accumulation unit 103. The accumulation unit 103 is an accumulation unit that once accumulates input image data.

The material data generation unit 104 generates material data to be used for the generation of a virtual viewpoint image, using image data accumulated in the accumulation unit 103. The material data according to the present exemplary embodiment is data for generating a virtual viewpoint image, and refers to data generated based on a captured image. The material data includes, for example, data of a foreground image and a background image extracted from a captured image, a model representing the shape of a subject in a three-dimensional space (hereinafter, will also be referred to as three-dimensional shape data), texture data for coloring the three-dimensional shape data, and the like. The material data generation unit 104 according to the present exemplary embodiment generates material data in a format preset by the virtual viewpoint image generation system 1.

The terminals 109a to 109d are display devices that acquire material data from the information processing apparatus 100 to be described below, and generate and display a virtual viewpoint image based on the material data. The terminals 109a to 109d can be personal computers (PCs), smartphones, tablets, and the like, for example. In the following description, the terminals 109a to 109d will be simply described as terminals 109 in a case where there is no reason to distinguish the terminals 109a to 109d from each other.

Next, a functional configuration of the information processing apparatus 100 included in the virtual viewpoint image generation system 1 will be described with reference to Fig. 2. The information processing apparatus 100 includes an acquisition unit 105, a storage unit 106, a conversion unit 107, and a transmission/reception unit 108.

The acquisition unit 105 acquires material data and stores the acquired material data into a storage unit 108. The acquisition unit 105 according to the present exemplary embodiment acquires material data from the material data generation unit 104 in the virtual viewpoint image generation system 1. When the acquisition unit 105 stores the acquired material data, the acquisition unit 105 stores the material data in a predetermined format (format). For example, the material data is stored in a format that enables data to be read or written in association with time information, a frame number, and the like, by generating a table for data access for reading out data. The kind of material data that can be acquired by the acquisition unit 105, and the format of material data to be stored will be described below.

The storage unit 106 stores input material data. The storage unit 106 corresponds to the external storage device 1606 illustrated in Fig. 1, and includes a semiconductor memory, a magnetic recording device, and the like. Data is written or read out based on an instruction from the acquisition unit 105, and the written data is output to the transmission/reception unit 108 in accordance with the readout instruction.

The conversion unit 107 performs processing of converting the format of material data stored in the storage unit 106, into a format processable by the terminal 109 being an output destination of the material data. The conversion processing will be described below. The transmission/reception unit 108 communicates with the terminals 109, and performs the transmission and reception of requests and data from the terminals. The terminals 109a to 109d acquire material data from the information processing apparatus 100. In addition, the terminals 109a to 109d receive a virtual viewpoint designation operation performed by the user, and generate a virtual viewpoint image corresponding to the designated virtual viewpoint, based on the material data. In addition, the terminals 109a to 109d display the generated virtual viewpoint image. In the present exemplary embodiment, the terminal 109a generates a virtual viewpoint image using a foreground image and point cloud data. In addition, the terminal 109b generates a virtual viewpoint image using colored point cloud data. In addition, the terminal 109c generates a virtual viewpoint image using a foreground image and a distance image. In addition, the terminal 109d generates a virtual viewpoint image using mesh data.

Here, material data to be used for the generation of a virtual viewpoint image sometime varies depending on a virtual viewpoint image generation method as described above. The reason why material data to be used varies can lie in that a virtual viewpoint image generation method employed by a terminal, and the type of software for virtual viewpoint image generation that is used by a terminal vary, for example. In addition, another reason lies in that the format of material data manageable by a terminal varies. Furthermore, another reason also lies in that the display capability or the processing capability of a terminal varies in such a manner that the terminal cannot display a virtual viewpoint image that is based on point cloud data while the terminal can display a virtual viewpoint image that is based on mesh data. These reasons can cause such a problem that, even if material data corresponding to a virtual viewpoint image that cannot be displayed by a terminal is output to the terminal, the terminal cannot generate a virtual viewpoint image. To solve this problem, the information processing apparatus 100 according to the present exemplary embodiment converts the format of acquired material data into a format processable by the terminal 109 being an output destination of the material data, and outputs the converted material data to the terminal 109.

### <Example of Kind and Format of Material Data>

The kind of material data that can be acquired by the acquisition unit 105 of the information processing apparatus 100 according to the present exemplary embodiment will be described. Because the acquisition unit 105 according to the present exemplary embodiment acquires material data generated by the material data generation unit 104, material data to be generated by the material data generation unit 104, and a generation method of the material data will be described below. The kind of material data to be described below is an example, and material data other than the following material data may be generated.

First of all, a case where the material data generation unit 104 generates, as material data, point cloud data indicating a three-dimensional shape of a subject, and a foreground image will be described. Here, the foreground image is an image of a region corresponding to an object (e.g., player, ball, or the like) that is extracted from a captured image. The material data generation unit 104 captures an image not including a subject, as a reference image, and extracts a region corresponding to the subject, using a difference from input image data (captured image), for example. In addition, based on an extraction result of the subject region, the material data generation unit 104 generates a silhouette image in which pixel values of a region corresponding to the subject are set to 1, and pixel values of other regions are set to 0.

Furthermore, using the generated silhouette image, the material data generation unit 104 generates point cloud data utilizing Shape-from-Silhouette. The generated point cloud data is data indicating a three-dimensional shape of the subject by an aggregate of a plurality of points each having information regarding a coordinate in a three-dimensional space. In addition, the material data generation unit 104 obtains a circumscribed rectangle of the extracted subject region, clips a region in a captured image that corresponds to the circumscribed rectangle, and generates an image of the region as a foreground image. The foreground image is used as texture data for coloring three-dimensional shape data when a virtual viewpoint image is generated. The generation method of the point cloud data and the foreground image is not limited to the above-described method, and an arbitrary generation method can be used.

Next, a case where the material data generation unit 104 generates, as material data, data (hereinafter, colored point cloud data) including a point cloud representing a three-dimensional shape of a subject, and information indicating the color of the subject will be described. The colored point cloud data can be generated using point cloud data generated using the above-described method, and a captured image or a foreground image of each camera 101 that is acquired from the accumulation unit 103. The material data generation unit 104 identifies, for each point included in the point cloud data, a color (pixel value) of a captured image acquired by the camera 101 that captures images of three-dimensional positions corresponding to points. By associating the identified color with the points, the material data generation unit 104 can generate colored point cloud data being point cloud data including color information.

Next, a case where the material data generation unit 104 generates, as material data, a distance image indicating a distance from each camera 101 to a subject will be described. The material data generation unit 104 generates a distance image by calculating a parallax between a plurality of captured images using a stereo matching method or the like, for example, and determining pixel values of a distance image from data of the parallax. The generation method of the distance image is not limited to this. For example, the material data generation unit 104 may generate a distance image by obtaining distances to each camera 101 from three-dimensional positions of points in point cloud data using point cloud data generated using the above-described method. In addition, the material data generation unit 104 may separately acquire a distance image using a distance camera including an infrared sensor or the like.

Next, a case where the material data generation unit 104 generates, as material data, mesh data indicating a three-dimensional shape of a subject will be described. Using the method discussed in Patent Literature 2, for example, the material data generation unit 104 generates mesh data being an aggregate of a plurality of polygons. When this method is used, distance image data generated using the above-described method is used as a depth map. The generation method of mesh data is not limited to this. For example, the material data generation unit 104 may generate mesh data by converting point cloud data, colored point cloud data, and the like that are generated using the above-described method.

Next, a case where the material data generation unit 104 generates billboard data indicating the overview of a subject will be described. The billboard data is data obtained by coloring a plate-like polygon using a foreground image. In a case where the material data generation unit 104 generates billboard data, the material data generation unit 104 generates the plate-like polygon, and a foreground image using the above-described method.

A part of the above-described processing performed by the material data generation unit 104 may be performed by different apparatuses such as an imaging apparatus and the information processing apparatus 100 to be described below. For example, generation processing of a silhouette image and/or a foreground image that is to be performed in a case where point cloud data is generated may be performed by the camera 101. In this case, the camera 101 allocates various types of information such as time information, a frame number, and a camera ID to a silhouette image and/or a foreground image generated based on a captured image, and transmits the silhouette image and/or the foreground image to the input unit 102.

Next, an example of a format of material data that is used when the above-described material data is stored will be described below. Material data generated by the material data generation unit 104 is acquired by the acquisition unit 105, and stored into the storage unit 106 in a format to be described below.

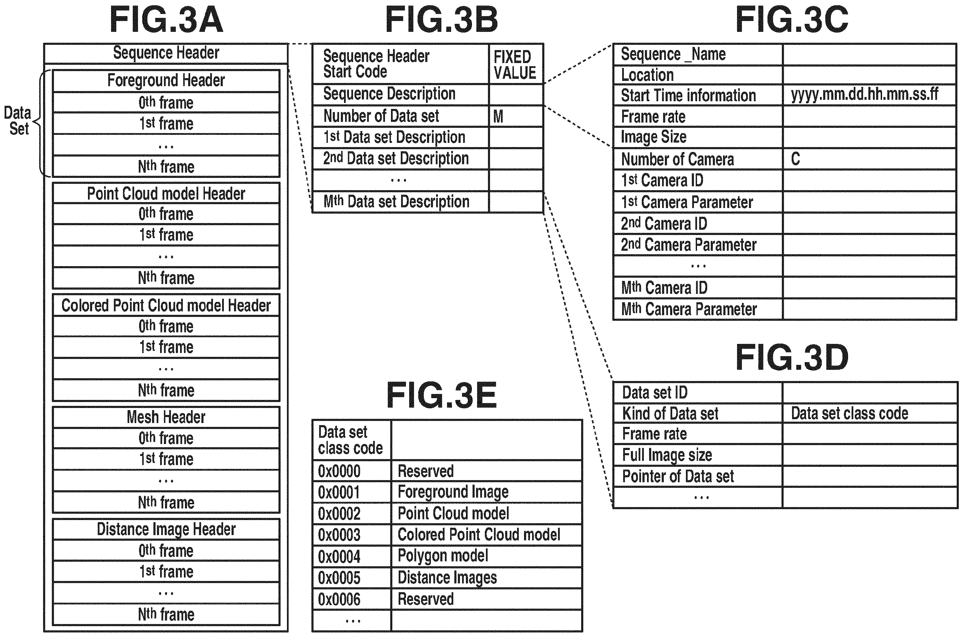

Figs. 3A to 3E illustrate an example of a form of material data to be stored in the storage unit 106. As illustrated in Fig. 3A, material data is stored as a sequence corresponding to one group. The sequence can be generated for each period during which image capturing has been performed, and for each game of which an image has been captured, and furthermore, for each event or cut that has occurred during a game, for example. The storage unit 106 manages data for each sequence. Each sequence includes a sequence header (Sequence Header). As illustrated in Fig. 3B, a sequence header start code (Sequence Header Start Code) indicating the beginning of a sequence is stored in the sequence header. Subsequently, information regarding the entire sequence is stored. For example, a name of the sequence, an image capturing location, time information indicating a date and time, a time, or the like at which image capturing has been started, a frame rate, and an image size are stored. As the name of the sequence, information for identifying the sequence, such as the name of a game or an event, for example, is described.

In the sequence, material data is stored for each unit called data set (Data Set). In the sequence header, the number of data sets (Number of Data set) M is described. After that, information regarding each data set is stored. In the information regarding each data set, an identification ID of a corresponding data set is initially allocated. As the identification ID, a unique ID among data sets in the storage unit 106 or all data sets is allocated. Subsequently, a kind of a data set is stored. In the example illustrated in Fig. 3A, point cloud data, a foreground image, colored point cloud data, distance image data, and mesh data are included in the sequence as data sets, but not all of these data sets are to be always included in the sequence. In the present exemplary embodiment, material data acquired by the acquisition unit 105 is included in the sequence as a data set. For example, in a case where the acquisition unit 105 acquires point cloud data and foreground image data, a sequence includes data sets of the point cloud data and the foreground image data. Each data set included in a sequence is represented by a data set class code (Data set class code). The data set class code is represented as a two-byte code illustrated in Fig. 3E. Nevertheless, the kind of data and codes are not limited to these. The data may be another kind of data indicating three-dimensional shape data. Subsequently, a pointer to a data set is stored. Nevertheless, the pointer is only required to be information for access to each data set, and such information is not limited to the pointer. For example, a file system may be constructed in a storage unit, and a file name may be used in place of the pointer.

Next, a format of each data set included in the sequence will be described. In the present exemplary embodiment, the description will be given using point cloud data, a foreground image, colored point cloud data, distance image data, mesh data, and billboard data as examples of kinds of data sets.

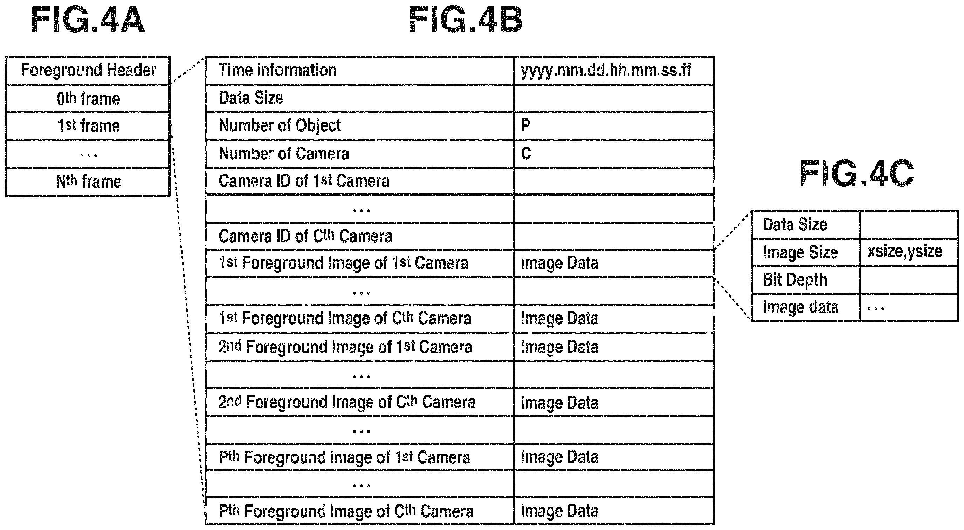

Figs. 4A to 4C illustrate an example of a configuration of a foreground image data set. For the sake of explanatory convenience, data in a foreground image data set is stored for each frame, but the data structure is not limited to this. As illustrated in Fig. 4A, a foreground image data header is stored at the head of the data set. Information indicating that this data set is a data set of a foreground image, the number of frames, and the like are stored in the header.

Fig. 4B illustrates information included in each frame. In each frame, time information (Time information) indicating a time of a forefront frame of foreground image data, and a data size (Data Size) of the frame are stored. The data size is information for referring to data of the next frame, and may be stored in the header together with the above-described information. Subsequently, the number of subjects (Number of Object) P for generating a virtual viewpoint image at the time indicated by the time information is stored. Furthermore, the number of cameras (Number of Camera) C used in image capturing at the time point is stored. Subsequently, a camera ID of a used camera (Camera ID of Cth Camera) is stored. Subsequently, image data of a foreground image including a subject (1st Foreground Image of Cth Camera) is stored for each subject. As illustrated in Fig. 4C, a data size of the foreground image, a size of the foreground image, a bit depth of each pixel value, and pixel values in a raster order are stored at the top of image data. After that, foreground image data from each camera is consecutively stored for each subject. In a case where a subject is not included in an image captured by a camera, NULL data may be written, or the number of cameras that have captured images of a subject, and corresponding camera IDs may be stored for each subject.

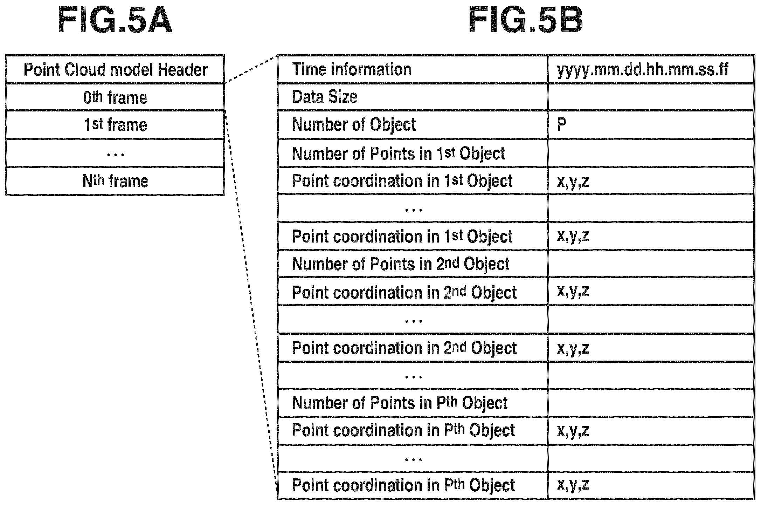

Figs. 5A and 5B illustrate an example of a configuration of a data set of point cloud data. For the sake of explanatory convenience, data in a point cloud data set is stored for each frame, but the data structure is not limited to this. A point cloud data header is stored at the head of the data set. As illustrated in Fig. 5A, information indicating that this data set is a data set of point cloud data, the number of frames, and the like are stored in the header.

Fig. 5B illustrates information included in each frame. In each frame, time information (Time information) indicating a time of a frame is stored. Subsequently, a data size (Data Size) of the frame is stored. The data size is information for referring to data of the next frame, and may be stored in the header together with the above-described information. Subsequently, the number of subjects at the time indicated by the time information (i.e., the number of point cloud data pieces) (Number of Object) P is stored. After that, point cloud data pieces corresponding to the respective subjects are stored in order. First of all, the number of coordinate points included in a point cloud of a first subject (Number of Points in 1st Object) is stored. After that, coordinates of points (Point coordination in 1st Object) are stored. After that, point cloud data pieces of all subjects included at the time corresponding to the time information are similarly stored.

In the present exemplary embodiment, a coordinate system is stored as three-axis data, but the coordinate system is not limited to this, and a polar coordinate or another coordinate system may be used. A data length of a coordinate value may be described as a fixed value in the point cloud data header, or a data length varying for each point cloud may be set. In a case where a data length varies for each point cloud, a data size is stored for each point cloud. By referring to a data size, a storage position of the next point cloud can be identified based on the number of coordinate points.

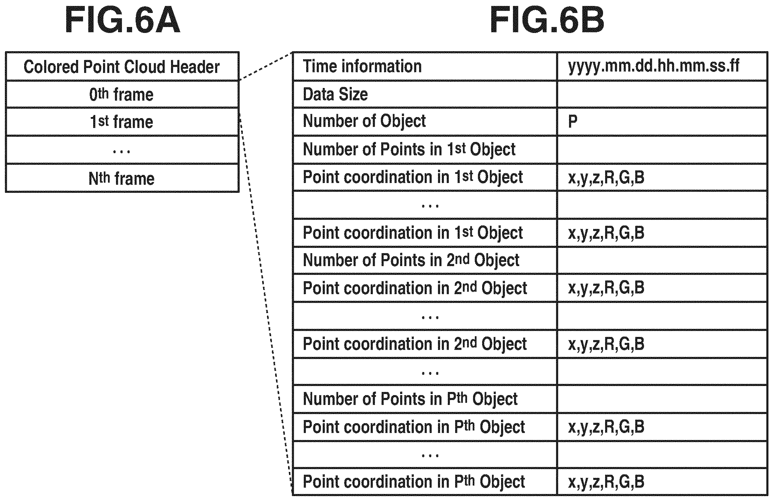

Figs. 6A and 6B illustrate an example of a configuration of a data set of colored point cloud data. For the sake of explanatory convenience, data in a colored point cloud data set is stored for each frame, but the data structure is not limited to this. A colored point cloud data header is stored at the head of the data set. As illustrated in Fig. 6A, information indicating that this data set is a data set of colored point cloud data, the number of frames, and the like are stored in the header.

Fig. 6B illustrates information included in each frame. In each frame, in each frame of point cloud data, time information (Time information) indicating a time of a frame is stored. Subsequently, a data size (Data Size) of the frame is stored. The data size is information for referring to data of the next frame, and may be stored in the header together with the above-described information. Subsequently, the number of subjects at the time indicated by the time information (i.e., the number colored point cloud data pieces) (Number of Object) P is stored. After that, colored point cloud data pieces of the respective subjects are stored in order. First of all, the number of coordinate points included in a point cloud of a first subject (Number of Points in 1st Object) is stored. After that, coordinates of points and color information of the points (Point coordination in 1st Object) are stored. After that, colored point cloud data pieces of all subjects included at the time corresponding to the time information are similarly stored.

In the present exemplary embodiment, a coordinate system is stored as three-axis data and color information is stored as values of RGB three primary colors, but the coordinate system and the color information are not limited to these. A coordinate system may be a polar coordinate or another coordinate system. In addition, color information may be represented by information such as a uniform color space, a luminance, or chromaticity. In addition, a data length of a coordinate value may be described as a fixed value in the colored point cloud data header, or a data length varying for each colored point cloud may be set. In a case where a data length varies for each colored point cloud, a data size is stored for each point cloud. By referring to a data size, a storage position of the next colored point cloud can be identified based on the number of coordinate points.

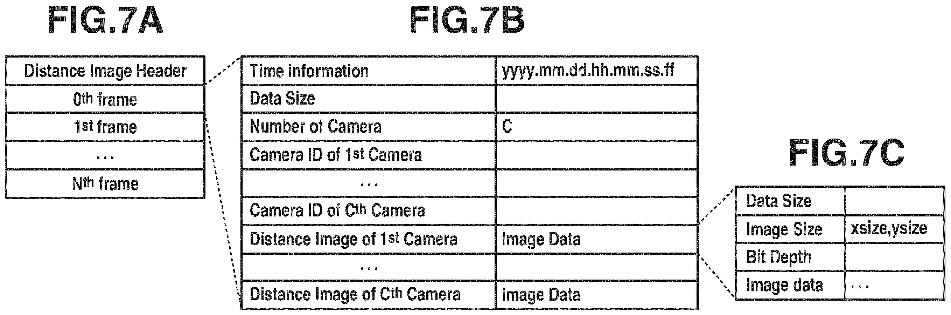

Figs. 7A to 7C illustrate an example of a configuration of a data set of distance image data. For the sake of explanatory convenience, data in a distance image data set is stored for each frame, but the data structure is not limited to this. A distance image data header is stored at the head of the data set. As illustrated in Fig. 7A, information indicating that this data set is a data set of distance image data, the number of frames, and the like are stored in the header.

Fig. 7B illustrates information included in each frame. In each frame, time information (Time information) indicating a time of a frame is stored. Subsequently, a data size (Data Size) of the frame is stored. The data size is information for referring to data of the next frame, and may be stored in the header together with the above-described information. Because distance image data is data acquired for each camera, the number of cameras (Number of Camera) C used in a frame is stored. Subsequently, a camera ID (Camera ID of Cth Camera) is stored in order. Subsequently, distance image data (Distance Image of Cth Camera) is stored. As illustrated in Fig. 7C, a data size of a distance image, a size of the distance image, a bit depth of each pixel value, and pixel values in a raster order are stored at the top of the distance image data,. After that, distance image data from each camera is consecutively stored. In a case where a subject is not included in an image captured by a camera, NULL data may be written, or only the number of cameras C that have captured images of a subject, and corresponding camera IDs may be stored for each subject.

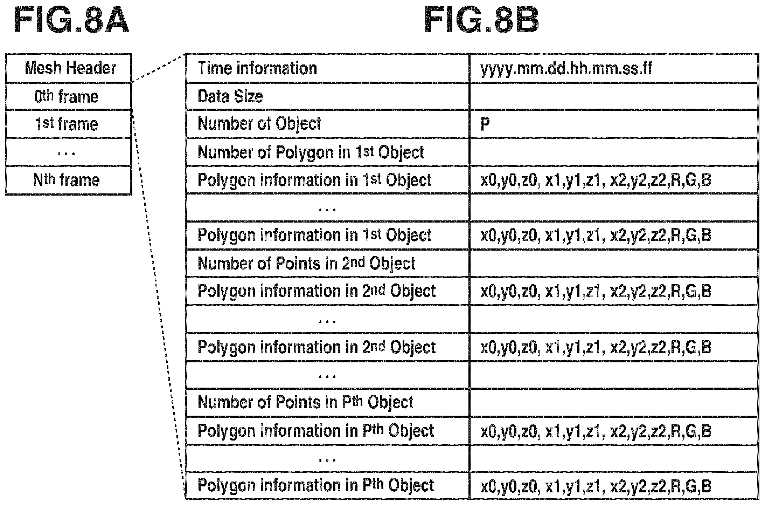

Figs. 8A and 8B illustrate an example of a configuration of a data set of mesh data. For the sake of explanatory convenience, data in a mesh data set is stored for each frame, but the data structure is not limited to this. A mesh data header is stored at the head of the data set. As illustrated in Fig. 8A, information indicating that this data set is a data set of mesh data, the number of frames, and the like are stored in the header.

Fig. 8B illustrates information included in each frame. In each frame, time information (Time information) indicating a time of a frame is stored. Subsequently, a data size (Data Size) of the frame is stored. The data size is information for referring to data of the next frame, and may be stored in the header together with the above-described information. Subsequently, the number of subjects (Number of Object) P is stored. After that, mesh data of each subject is stored. In the mesh data of each subject, the number of polygons included in mesh data (Number of Points in Pth Object) is stored at the top. Furthermore, in the mesh data of each subject, data of each polygon (i.e., coordinates of vertices of each polygon and information regarding the color of each polygon (Polygon information in Pth Object)) is stored. After that, mesh data pieces of all subjects included at the time corresponding to the time information are similarly stored., The above-described mesh data is mesh data in which one color is allocated to one polygon, but the mesh data may be mesh data not including color information. In the following description, mesh data illustrated in Figs. 8A and 8B will be referred to as colored mesh data, and mesh data not including color information will be simply referred to as mesh data. In a case where a virtual viewpoint image is generated using colored mesh data, the color of each polygon is determined irrespective of the position of a virtual viewpoint and an eye direction from the virtual viewpoint. On the other hand, in a case where a virtual viewpoint image is generated using mesh data not including color information, in accordance with the position of a virtual viewpoint and an eye direction from the virtual viewpoint, each polygon is colored using a foreground image.

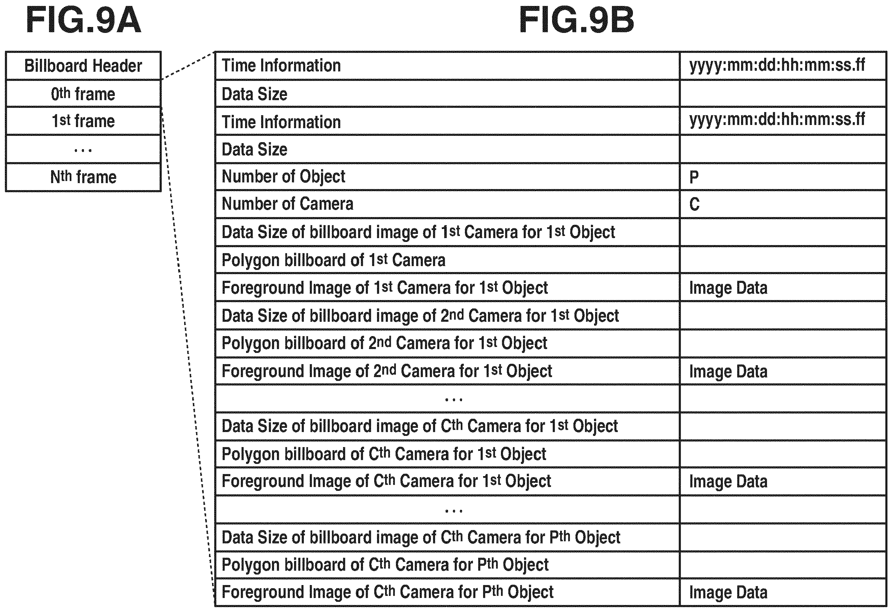

Figs. 9A and 9B illustrate an example of a configuration of a data set of billboard data. For the sake of explanatory convenience, data in a billboard data set is stored for each frame, but the data structure is not limited to this. As illustrated in Fig. 9A, a billboard data header is stored at the head of the data set. Information indicating that this data set is a data set of billboard data, the number of frames, and the like are stored in the header. In billboard data of each frame, time information (Time information) indicating a time of a frame is stored. Subsequently, a data size (Data Size) of the frame is stored. After that, billboard data of each camera is stored for each subject.

The billboard data is stored for each subject as a combination of polygon data of a billboard in each camera, and image data to be subjected to texture mapping. First of all, one piece of polygon data of a billboard (Polygon billboard of Cth Camera for Pth Object) is described. Subsequently, foreground image data for performing texture mapping (Foreground Image of Cth Camera for Pth Object) is stored. In the billboard method, by treating a subject as one polygon, amounts of processing and data can be drastically reduced. The number of polygons representing billboard data is not limited to one, and is the number of polygons smaller than that of mesh data.

In the present exemplary embodiment, a coordinate system for describing a vertex is stored as three-axis data and color information is stored as values of RGB three primary colors, but the coordinate system and the color information are not limited to these. A coordinate system may be a polar coordinate or another coordinate system. In addition, color information may be represented by information such as a uniform color space, a luminance, or chromaticity. In addition, an existing format such as a Polygon File Format (PLY) or a Stanford Triangle Format (STL), for example, may be used. Such format can be used by preparing a data set class code corresponding to each format.

### <Example 1 of Conversion Processing to Be Performed by Conversion Unit>

Next, conversion processing to be performed by the conversion unit 107 will be described. The conversion unit 107 performs processing of converting material data that has been acquired by the acquisition unit 105, and is stored in the storage unit 106 in a predetermined format, into a format processable by an output destination apparatus. As described above, because a plurality of types of virtual viewpoint image generation methods exist, material data to be used sometimes varies depending on the generation method. On the other hand, some systems generating material data can only generate material data in a predetermined format. At this time, in a case where the format of material data generated by a system is a format unprocessable by an apparatus that performs processing related to the generation of a virtual viewpoint image, such a problem that a virtual viewpoint image is not generated can occur. To solve this problem, by converting the format of material data into a processable format via the conversion unit 107, an output destination apparatus of the material data becomes able to appropriately perform processing.

The conversion unit 107 first identifies material data processable by an output destination apparatus of material data. The transmission/reception unit 108 acquires, from the terminal 109 connected to the information processing apparatus 100, information for identifying a format of material data processable by the terminal 109. Here, a state in which the terminal 109 can process material data refers to a state in which the terminal 109 interprets data in a file of acquired material data, and can appropriately perform processing in accordance with the description in the material data. For example, a file format of material data unsupported and unreadable by the terminal 109 is an unprocessable file format. In addition, a state in which a terminal 112 can process material data refers to a state in which the terminal 112 can generate a virtual viewpoint image based on acquired material data. In addition, in the present exemplary embodiment, the wording representing that the "format" of material data is identified is used, but an arbitrary term such as a "kind", a "structure", or "form" of material data may be used.

Information to be acquired can include, for example, information regarding the specification or the type of the terminal, information regarding the processing capability of the terminal, and the like. Information to be acquired can also include, for example, a virtual viewpoint image generation method to be used by the terminal, information regarding an application, software, and the like that are to be used for the generation or reproduction of a virtual viewpoint image, and the like. Information to be acquired can also include, for example, information regarding a format of a virtual viewpoint image displayable by the terminal, and the like. The transmission/reception unit 108 transmits the acquired information to the conversion unit 107. The conversion unit 107 identifies the format of material data to be output to the terminal 109, based on the acquired information.

In addition, the conversion unit 107 identifies the format of material data stored in the storage unit 106. The conversion unit 107 identifies the kind of material data by referring to a data set class code, a data set header, and the like of the material data stored in the storage unit 106, for example. In a case where the format or the kind of material data to be acquired by the acquisition unit 105 is predetermined, the conversion unit 107 need not refer to a data set. In a case where the format of material data to be output to the terminal 109, and the format of material data stored in the storage unit 106 are not identical, the conversion unit 107 performs conversion processing of material data stored in the storage unit 106. The transmission/reception unit 108 outputs material data obtained by the conversion processing, to an output destination apparatus.

As an example of conversion processing, a case where only a foreground image data set and a point cloud data set are stored in the storage unit 106 will be described. Here, it is assumed that the terminal 109c is connected to the information processing apparatus 100, and a distance image output request has been issued from the terminal 109c. In this case, the conversion unit 107 compares a data set request from the terminal 109c that has been input from the transmission/reception unit 108, and the format of material data stored in a storage unit 309. As a result of the comparison, the conversion unit 107 determines that material data in a format satisfying the request is not stored. The conversion unit 107 acquires a point cloud data set from the storage unit 106, and converts the point cloud data set into a distance image data set by obtaining a distance to each camera from each point of point cloud data, and generating distance image data. In other words, the conversion unit 107 converts the point cloud data set illustrated in Figs. 5A and 5B, into the distance image data set illustrated in Figs. 7A to 7C. The transmission/reception unit 108 outputs the distance image data obtained by the conversion processing, to the terminal 109.

In this manner, in accordance with a request from the terminal 109, the conversion unit 107 converts the format of material data stored in the storage unit 106, into a predetermined format. In a case where the format of material data requested by the terminal 109, and the format of material data stored in the storage unit 106 are identical, conversion processing is not performed. In this case, for example, the conversion unit 107 may acquire material data stored in the storage unit 106, and transmit the acquired material data to the transmission/reception unit 108 without performing conversion, or material data may be directly transmitted to the transmission/reception unit 108 from the storage unit 106.

By the processing similar to the flow of the above-described processing, the conversion unit 107 performs conversion processing as follows. For example, in a case where point cloud data and foreground image data are stored in the storage unit 106, in accordance with a request from the terminal 109, data can be converted into colored point cloud data, a distance image, mesh data and a foreground image, colored mesh data, or billboard data. In addition, for example, in a case where colored point cloud data is stored in the storage unit 106, in accordance with a request from the terminal 109, data can be converted into colored mesh data, a distance image, or billboard data. In addition, for example, in a case where mesh data and foreground image data are stored in the storage unit 106, in accordance with a request from the terminal 109, data can be converted into point cloud data and foreground image data, colored point cloud data, colored mesh data, a distance image, or billboard data. In addition, for example, in a case where colored mesh data is stored in the storage unit 106, in accordance with a request from the terminal 109, data can be converted into colored point cloud data, a distance image, or billboard data.

In addition, for example, in a case where distance image data and a foreground image are stored in the storage unit 106, in accordance with a request from the terminal 109, data can be converted into billboard data. In addition, for example, in a case where billboard data and foreground image data are stored in the storage unit 106, data can be converted into point cloud data and foreground image data, colored point cloud data, mesh data and a foreground image, colored mesh data, or a distance image. In a case where billboard data is to be converted into point cloud data or mesh data indicating a three-dimensional shape, the billboard data is converted by executing the Shape-from-Silhouette that uses the billboard data, for example.

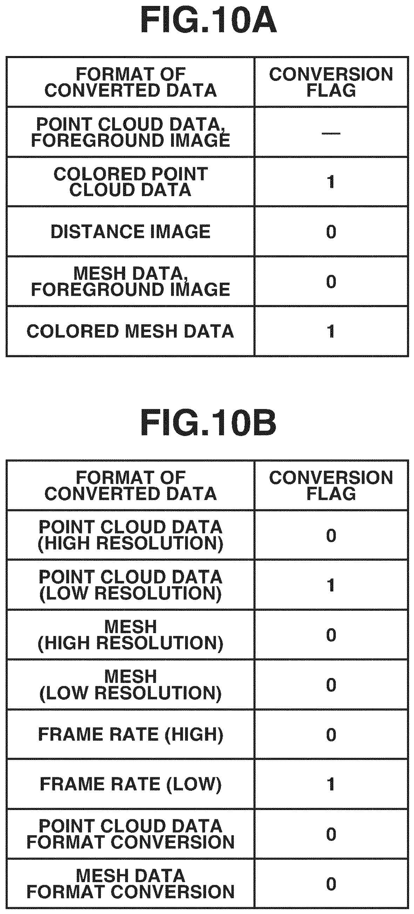

In the above-described example, the description has been given of a configuration in which the conversion unit 107 performs conversion processing of material data based on information acquired from the terminal 109, but the configuration is not limited to this. In a case where an output destination terminal of material data is preliminarily identified, the conversion unit 107 can preliminarily convert material data to be output to the terminal. For example, it is assumed that point cloud data and foreground image data are stored in the storage unit 106, and the terminals 109a, 109b, and 109d are connected to the information processing apparatus 100. The terminal 109a generates a virtual viewpoint image using a foreground image and point cloud data. In addition, the terminal 109b generates a virtual viewpoint image using colored point cloud data. In addition, the terminal 109d generates a virtual viewpoint image using colored mesh data. Here, referring to a table illustrated in Fig. 10A, the conversion unit 107 determines data to be converted from point cloud data and foreground image data stored in the storage unit 106. A conversion flag in Fig. 10A indicates " 1" in a case where conversion is to be performed, and indicates "0" in a case where conversion is not to be performed. Based on a value of the conversion flag, the conversion unit 107 converts the point cloud data and the foreground image data into colored point cloud data and colored mesh data. The transmission/reception unit 108 outputs the colored point cloud data and the colored mesh data that have been generated by the conversion processing performed by the conversion unit 107, to the terminals 109b and 109d, respectively. In addition, the transmission/reception unit 108 outputs point cloud data and foreground image data that are stored in the storage unit 106, to the terminal 109a.

By the above-described configuration, also in a case where the kind of material data acquired by the acquisition unit 105 differs from the kind of material data requested by the terminal 109, the material data can be output after its format being converted into an appropriate format. In the above-described example, the description has been given of an example in which point cloud data and foreground image data are acquired, but conversion processing is similarly performed also in a case where another kind of material data is acquired.

### <Example 2 of Conversion Processing to Be Performed by Conversion Unit>

Next, another example of conversion processing to be performed by the conversion unit 107 will be described. The conversion unit 107 can convert not only the kind of material data but also content of material data. Here, as content to be converted, a resolution and a frame rate, which serve as information for identifying a data amount of material data, will be described. Furthermore, as content to be converted, a format will also be described.

First of all, conversion processing of the resolution of material data will be described. For example, in a case where point cloud data is stored in the storage unit 106, the conversion unit 107 can change the resolution of the point cloud data. The resolution indicates the density of a plurality of points included in the point cloud data. The density of a plurality of points corresponds to the number of points to be used for representing a three-dimensional shape of a subject. As the density of a plurality of points becomes larger, the resolution becomes higher because a three-dimensional shape can be represented more finely. On the other hand, as the density of a plurality of points becomes smaller, the resolution becomes lower. In accordance with information acquired from the terminal 109, the conversion unit 107 performs conversion processing in such a manner as to increase the density of points included in the point cloud data (increase the resolution), or decrease the density (decrease the resolution). In a case where the density is to be increased, the conversion unit 107 performs processing of interpolating between a plurality of points, for example. In addition, in a case where the density is to be increased, the conversion unit 107 performs processing of thinning out points. The interpolation processing of points and the processing of thinning out points may be uniformly performed on point cloud data, or may be performed using an arbitrary method. For example, the interpolation processing of points and the processing of thinning out points may be performed in such a manner that the density of points in a face portion of a player becomes higher than that in a body portion of the player. In addition, in a case where interpolation or thinning-out of points of point cloud data is performed, the conversion unit 107 changes the content of the point cloud data stored in the storage unit 106. In this case, the conversion unit 107 adds and deletes information regarding coordinates of points to and from the information illustrated in Fig. 5B.

The above-described conversion method of the resolution of point cloud data can be applied also to colored point cloud data. In addition, a case where material data stored in the storage unit 106 is voxel data being an aggregate of voxels each having a predetermined volume will be described. The resolution of voxel data corresponds to a size of one voxel representing a three-dimensional shape (voxel size). As the voxel size becomes smaller, the resolution becomes higher because a three-dimensional shape can be represented more finely. On the other hand, as the voxel size becomes larger, the resolution becomes lower. In accordance with information acquired from the terminal 109, the conversion unit 107 performs conversion processing in such a manner as to decrease the size of voxels included in the voxel data (increase the resolution), or increase the size (decrease the resolution).

In addition, a case where material data stored in the storage unit 106 is mesh data will be described. The resolution of mesh data corresponds to a size of polygons included in mesh data (polygon size). As the polygon size becomes smaller, the resolution becomes higher because a three-dimensional shape can be represented more finely. On the other hand, as the polygon size becomes larger, the resolution becomes lower. In accordance with information acquired from the terminal 109, the conversion unit 107 performs conversion processing in such a manner as to decrease the size of polygons included in the mesh data (increase the resolution), or decrease the size (decrease the resolution). As a conversion method of the polygon size, for example, the conversion is performed by processing such as processing of increasing the number of vertices of each polygon (increasing the number of polygons), or decreasing the number of vertices (decreasing the number of polygons). In addition, in a case where the conversion unit 107 has changed the number of vertices of each polygon, in accordance with the change processing, the conversion unit 107 changes the content of polygon information illustrated in Fig. 8B. The above-described conversion processing of the resolution of mesh data can be applied also to colored mesh data.

In addition, the conversion unit 107 converts the resolution of a foreground image. The conversion unit 107 can perform processing of increasing the number of information pieces regarding pixel values (increasing the resolution) by super-resolution processing, for example, or processing of decreasing the number of information pieces regarding pixel values (decreasing the resolution) by replacing an average value of a plurality of pixel values with one pixel value. The conversion of the resolution of a foreground image is performed in conjunction with material data to be colored using a foreground image, such as point cloud data or mesh data. In a case where the conversion unit 107 has converted the resolution of point cloud data or mesh data into a lower resolution, for example, the conversion unit 107 also changes the resolution of a foreground image to a lower resolution. In addition, in a case where the conversion unit 107 has converted the resolution of point cloud data or mesh data into a higher resolution, for example, the conversion unit 107 also changes the resolution of a foreground image to a higher resolution. Nevertheless, the conversion processing of the resolution of a foreground image is not limited to this. For example, even in a case where the conversion unit 107 has converted the resolution of point cloud data or mesh data into a lower resolution, the conversion unit 107 may avoid changing the resolution of a foreground image. This configuration causes such an effect that, although a three-dimensional shape is represented roughly, the color becomes closer to an actual color of a subject, and a deterioration in image quality of a virtual viewpoint image is suppressed while reducing a data amount.

The conversion unit 107 may perform processing of converting the accuracy of coordinate values of points in point cloud data, coordinate values of vertices of meshes in mesh data, and values of distances in distance image data. In other words, the conversion unit 107 can perform processing of changing the accuracy of data, by converting these values into any of floating-point values, fixed-point values, or integer numbers. In addition, the conversion unit 107 may perform conversion processing of decreasing a bit depth of pixel values of a foreground image by quantization processing or the like, or the like, and conversion processing of increasing the bit depth by interpolation processing or the like.

Next, conversion processing of a frame rate of material data will be described. The conversion unit 107 can perform conversion processing in such a manner as to increase or decrease a frame rate of material data stored in the storage unit 106. For example, a case where a frame rate of material data stored in the storage unit 106 is 60 frames per second (fps) will be described. In a case where a frame rate is to be increased, the conversion unit 107 changes the frame rate to 120 fps by generating frames in such a manner as to interpolate between frames, for example. In addition, in a case where a frame rate is to be decreased, for example, the conversion unit 107 changes the frame rate to 30 fps by performing processing of thinning out frames, for example. The value of the changed frame rate and the frame rate changing method are not limited to these. For example, a frame rate may be changed only within a specific range in a sequence of data sets. The change of a frame rate can be applied also to material data of any kind of foreground image data, point cloud data, mesh data, distance image data, billboard data, and the like.

Next, conversion processing of a format of material data will be described. The format refers to an extension of a file, a structure of data, or the like, for example. In a case where an extension of a file of material data processable by the terminal 109 and an extension of a file of material data stored in the storage unit 106 are different, for example, the conversion unit 107 performs conversion processing of a format of a file. The processing can be applied also to material data of any kind. In addition, for example, the conversion unit 107 may perform processing of changing the shape of polygons included in mesh data stored in the storage unit 106. For example, in a case where the shape of polygons in mesh data stored in the storage unit 106 is a triangle, and the shape of polygons in mesh data processable by the terminal 109 is a hexagon, the conversion unit 107 performs processing of converting the shape of polygons from a triangle into a hexagon. In this manner, the conversion unit 107 can change the shape of polygons into an arbitrary polygonal shape.

In the above-described example, conversion processing of a resolution, a frame rate, and a format of material data is performed based on information acquired from the terminal 109, but the conversion processing is not limited to this. In a case where an output destination terminal of material data is preliminarily identified, the conversion unit 107 can preliminarily convert material data to be output to the terminal. In this case, referring to a table as illustrated in Fig. 10B, for example, the conversion unit 107 performs conversion processing of material data. In the example illustrated in Fig. 10B, the conversion unit 107 converts the resolution of point cloud data stored in the storage unit 106, into a lower resolution, and converts a frame rate into a smaller frame rate.

By performing conversion of information for identifying a data amount, such as a resolution or a frame rate of material data, for example, it becomes possible to output material data suitable for the processing capability or the display capability of a terminal. For example, in a case where the resolution of material data is equivalent to a 4K resolution, and a terminal can display a 8K video, the conversion unit 107 converts the resolution of the material data into a higher resolution. In contrast, in a case where a terminal can only display a 2K video, the conversion unit 107 converts the resolution of the material data into a lower resolution.

### <Operation of Information Processing Apparatus>

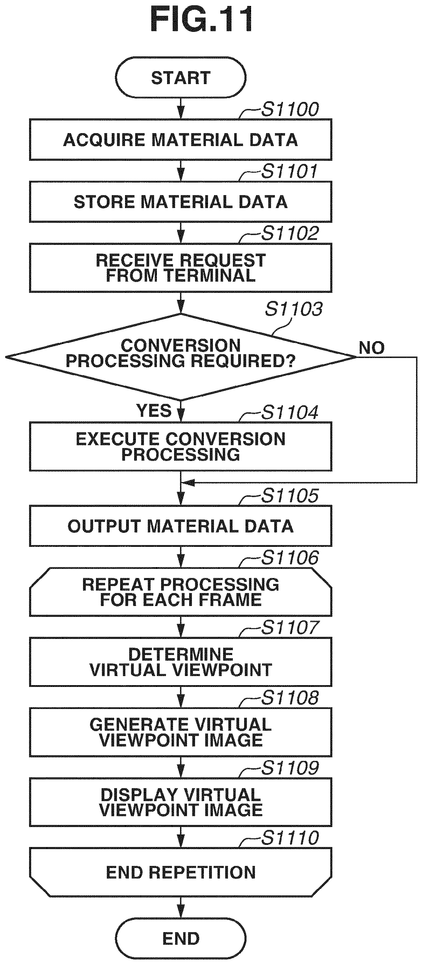

Next, an operation of the information processing apparatus 100 and an operation of the terminal 109 that acquires material data from the information processing apparatus will be described with reference to a flowchart in Fig. 11. The processing illustrated in Fig. 11 is implemented by a CPU included in each apparatus in the virtual viewpoint image generation system 1, reading out and executing a program stored in a ROM or an external storage device. If the power of the information processing apparatus 100 is turned ON, the processing is started.

In step S 1100, the acquisition unit 105 acquires material data from a different apparatus. Here, the acquisition unit 105 acquires material data generated by the material data generation unit 104. In step S1101, the acquisition unit 105 stores the acquired material data into the storage unit 106 in the above-described format. In step S1102, the transmission/reception unit 108 receives a material data output request from the terminal 109 connected to the information processing apparatus 100. At this time, the transmission/reception unit 108 acquires, from the terminal 109, information for identifying a format of material data processable by the terminal 109. Information to be acquired by the transmission/reception unit 108 from the terminal is not limited to the above-described information. For example, information for designating specific material data such as point cloud data may be acquired. In addition, the information processing apparatus 100 may prestore, into an external storage device or the like, a table associating types of a plurality of terminals, and material data pieces to be output to the respective terminals, and the transmission/reception unit 108 may acquire the table. The transmission/reception unit 108 transmits the acquired information to the conversion unit 107.

In addition, in step S 1102, the transmission/reception unit 108 acquires information for identifying a sequence of material data. The information for identifying a sequence can be a sequence name, for example. The transmission/reception unit 108 transmits the acquired information such as a sequence name to the conversion unit 107, and issues an instruction in such a manner that a corresponding sequence is acquired.

In step S 1103, the conversion unit 107 determines whether conversion processing of material data is required, based on the format of material data stored in the storage unit 106, and the information acquired from the transmission/reception unit 108. In a case where the format of material data to be output to the terminal 109 that is identified based on the information acquired from the transmission/reception unit 108 is not identical to the format of material data stored in the storage unit 106, the conversion unit 107 determines that conversion processing is required (YES in step S1103). Then, in step S 1104, the conversion unit 107 performs conversion processing of the material data stored in the storage unit 106. On the other hand, in a case where the format of material data to be output to the terminal 109 is identical to the format of material data stored in the storage unit 106, the conversion unit 107 determines that conversion processing is not required (NO in step S1103), and skips the processing in step S1104.

In step S1105, the transmission/reception unit 108 outputs material data acquired from the conversion unit 107, to the terminal 109. In step S1106, the terminal 109 acquires the material data, and executes the processing in steps S1107 and S1108. The processing in steps S1107 and S1108 is repeatedly performed for each frame of a virtual viewpoint image to be generated.

In step S1107, the terminal 109 determines the position of a virtual viewpoint and an eye direction from the virtual viewpoint based on a user operation or the like. In step S1108, the terminal 109 generates a virtual viewpoint image based on the material data acquired from the information processing apparatus 100, and the determined position of the virtual viewpoint and the determined eye direction from the virtual viewpoint. In a terminal such as the terminal 109a that generates a virtual viewpoint video from foreground image data and point cloud data, positions of points of point cloud data in a virtual viewpoint image are initially identified. In addition, by coloring pixel values corresponding to the positions of points, by projection of foreground image data, a virtual viewpoint image is generated. In the method of generating a virtual viewpoint image from foreground image data and point cloud data, in accordance with the position of a virtual viewpoint and an eye direction from the virtual viewpoint, the color to be allocated to each point changes. Also in a terminal such as the terminal 109b that generates a virtual viewpoint image from colored point cloud data, positions of points of point cloud data in a virtual viewpoint video are initially identified. By coloring pixel values corresponding to the identified positions of points, with colors associated with the points, a virtual viewpoint image is generated. In the method of generating a virtual viewpoint image using colored point cloud, because a color corresponding to each point is fixed, coloring is performed with a predetermined color irrespective of the position of a virtual viewpoint and an eye direction from the virtual viewpoint.

In a terminal such as the terminal 109c that generates a virtual viewpoint image from distance image data and foreground image data, the position of an object on a virtual viewpoint image is identified from a plurality of distance image data pieces, and a virtual viewpoint image is generated by texture mapping that uses a foreground image. In a terminal such as the terminal 109d that generates a virtual viewpoint image from mesh data, by attaching the value of a color and an image to a surface visible from a virtual viewpoint, similarly to normal computer graphics, a virtual viewpoint image is generated.

In step S1109, the terminal 109 displays the generated virtual viewpoint image on a display unit. In step S1110, the terminal 109 determines whether to end the repetitive processing. For example, if the generation of a virtual viewpoint image ends in accordance with an instruction from the user or the like, the repetitive processing ends.

By the above-described configuration and operations, the information processing apparatus 100 performs conversion processing based on information for identifying the format of material data processable by the terminal 109, and outputs the obtained material data to the terminal 109. With this configuration, even in a case where the format of material data stored in the information processing apparatus 100 and the format of material data processable by a terminal are different, material data processable by the terminal can be output. In the processing illustrated in Fig. 11, after conversion processing is performed in step S1104, the processing to be repeated for each frame of a virtual viewpoint image is performed, but a processing order is not limited to this. More specifically, the information processing apparatus 100 may read out material data stored in the storage unit 108, in accordance with a determined virtual viewpoint, and output material data generated by performing conversion processing, to the terminal 109. In this case, for example, the processing in steps S1102 to S1104 in Fig. 11 is performed between steps S1107 and S1108.

In addition, the information processing apparatus 100 may store converted material data acquired by the conversion unit 107, into the storage unit 106. At this time, material data generated by the conversion processing may be stored into the same storage unit 106, or may be stored into a storage unit different for each kind of material data. Furthermore, in a case where material data is stored into a different storage unit, the information processing apparatus 100 may include a plurality of storage units, or storage units may be included in the virtual viewpoint image generation system 1 as different apparatuses. In a case where material data pieces of a plurality of kinds are stored into different storage units, the information processing apparatus 100 outputs information such as a pointer that indicates a location where material data to be output to the terminal 109 is stored, to the terminal 109. With this configuration, the terminal 109 can access a storage unit storing material data necessary for the generation of a virtual viewpoint image, and acquire the material data.

### (Modified Example of First Exemplary Embodiment)

In the first exemplary embodiment, the description has been given of a configuration in which material data is generated in the virtual viewpoint image generation system 1, and acquired by the acquisition unit 105 in the information processing apparatus, but the configuration is not limited to this. The information processing apparatus 100 can acquire material data generated in a different system, or acquire material data pieces from a plurality of apparatuses, for example. Then, the information processing apparatus 100 can convert the format of the acquired material data into a format suitable for the terminal 109, and output the converted material data to the terminal 109.

In addition, in the first exemplary embodiment, a foreground image divided for each subject is stored, but the configuration is not limited to this. An image captured by a camera may be stored as-is. In addition, in the first exemplary embodiment, point cloud data is stored for each frame, but the configuration is not limited to this. For example, by identifying each subject, point cloud data can also be stored for each subject.

In addition, in the first exemplary embodiment, to identify three-dimensional shape data, information for identifying data is stored in a header of a sequence, but a data management method is not limited to this. Data may be managed using a list associated with data, or the like. In addition, material data stored in the storage unit 106 may be encoded. At this time, the acquisition unit 105 may encode material data when storing the material data into the storage unit 106, or may acquire material data having been subjected to encoding processing performed by the material data generation unit 104.

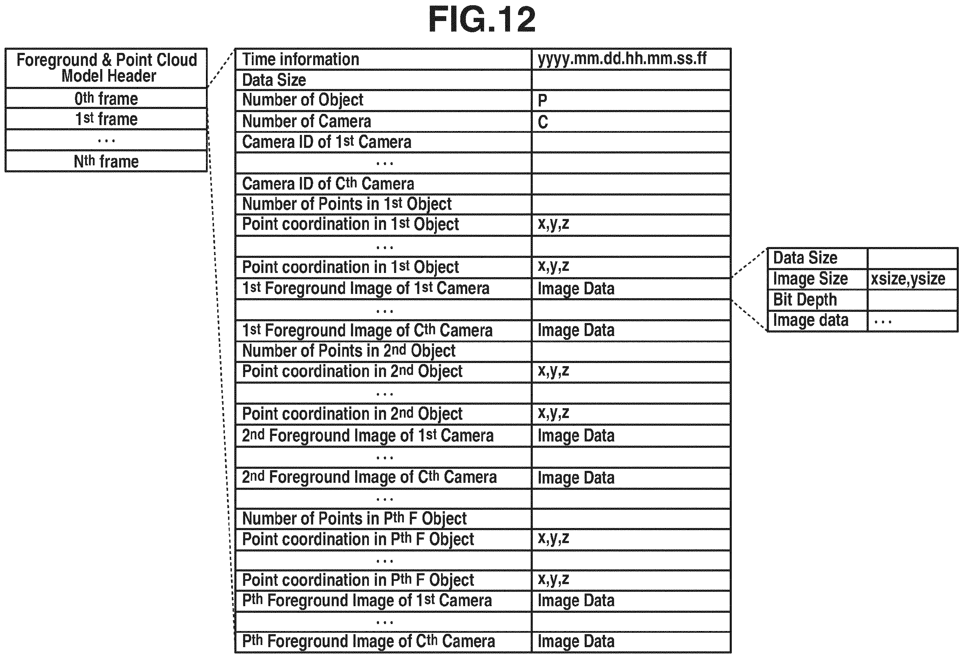

In addition, in the first exemplary embodiment, foreground image data and point cloud data are stored as different data sets, but the configuration is not limited to this. Fig. 12 illustrates an example of a configuration of a foreground image/point cloud data set in which foreground image data and point cloud data are integrated. In the format illustrated in Fig. 12, similarly to the foreground image data set illustrated in Figs. 4A to 4C, a foreground image/point cloud data header (Foreground & Point Cloud Model Header) is stored at the head of the data set. In the data header, information indicating that this data set is a data set of foreground image/point cloud data, the number of frames, and the like are stored in the header. Subsequently, foreground image data and point cloud data of each frame are stored. In the foreground image/point cloud data of each frame, time information (Time information) indicating a time of a frame, and a data size (Data Size) of the frame are stored. Subsequently, the number of subjects (Number of Object) P corresponding to the time indicated by the time information is stored. Furthermore, the number of cameras (Number of Camera) C used in image capturing at the time point is stored. Subsequently, a camera ID of a used camera (Camera ID of Cth Camera) is stored. Subsequently, data of each subject is stored. First of all, similarly to the point cloud data illustrated in Figs. 5A and 5B, the number of coordinate points included in a point cloud of a subject is stored. After that, coordinates of points are stored. Subsequently, similarly to the foreground image data illustrated in Figs. 4A to 4C, foreground image data including a subject that is acquired by each camera is stored in order. After that, point cloud data and foreground image data are stored for each subject.

With the above-described configuration, a combination of essential data sets can be integrally stored depending on a terminal serving as a renderer. With this configuration, data readout can be simplified. Here, the description has been given of a format in which point cloud data and foreground image data are integrated, but a data combination is not limited to this. For example, a format in which arbitrary data pieces are integrally combined, such as a format in which a distance image and a foreground image are integrated, or a format in which three or more material data pieces are integrated, can be used. In addition, the conversion unit 107 can also perform conversion such as the above-described integration of material data pieces, and separation of integrated material data.

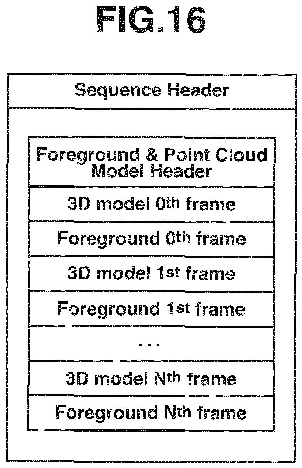

In addition, as illustrated in Fig. 16, frame data of point cloud data and frame data of foreground image data may be merely interleaved and alternately stored. Similarly, distance image data may be stored in place of point cloud data. The conversion unit 107 can also convert the configuration of material data into the data configuration as illustrated in Fig. 16.

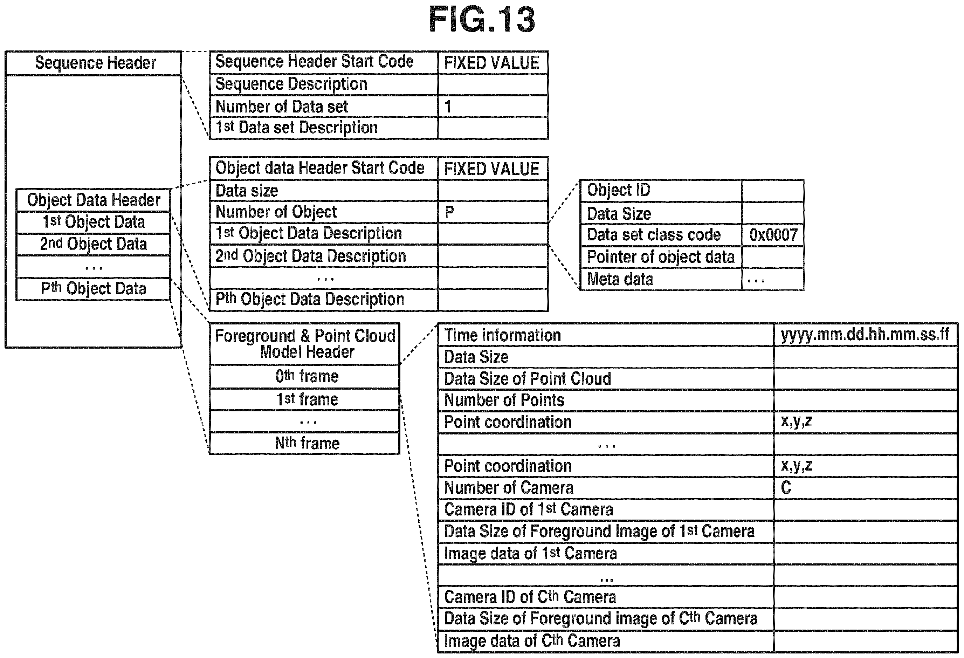

In addition, material data may be managed for each object. Fig. 13 illustrates an example.

As a new data set of a sequence, an object data set is defined. A plurality of object data sets may exist. For example, an object data set can be provided for each predetermined unit, such as for each team to which a subject belongs.

In an object data header at the head of the object data set, an object data header start code (Object Data Header) indicating the beginning of the object data set is stored. Furthermore, a data size (Data size) is stored in the object data header. Subsequently, the number of subjects (Number of Object) P included in the object data set is stored. After that, information regarding data is stored for each subject.

In information regarding subject data (Pth Object Data Description), an ID number (Object ID) of the subject and a size (Data Size) of information regarding subject data are stored. Subsequently, a data set class code (Data set class code) indicating the kind of data serving as a data set is stored. In addition, a pointer to object data of the subject (Pointer of object data) is stored. In addition, metadata of the subject (Meta data) is stored. As the metadata, for example, in the case of sport, information such as a name of a player, a team to which the player belongs, and a uniform number can be stored.

In each piece of object data, data that is based on the data set class code is stored. Fig. 13 illustrates an example of a data set in which a foreground image and point cloud data are integrated. At the head, a size of the object data set, time information of a forefront frame, a frame rate, and the like are stored as a header. After that, data of each frame is stored. In the data of each frame, time information (Time information) of a corresponding frame, and a data size (Data size) of the frame are stored at the head. Subsequently, a size of point cloud data in a frame of the subject (Data Size of Point Cloud) and the number of points (Number of Points) are stored. After that, coordinates of points of the point cloud (Point coordination) are stored. Subsequently, the number of cameras (Number of Camera) C that have captured images of the subject is stored. After that, a camera ID of each camera (Camera ID of 1st to Cth Camera) and foreground image data (Data Size of Foreground image of 1st to Cth Camera) are stored. After that, a camera ID and foreground image data are stored for each camera.

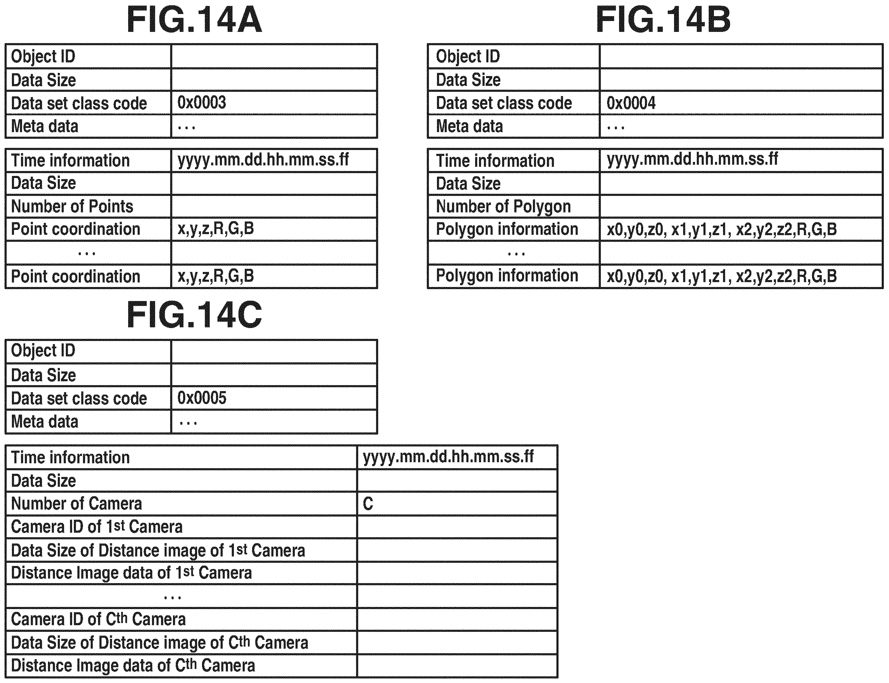

If a data set of object data is a data set of colored point cloud data, a data set class code is set as illustrated in Fig. 14A, and time information, a data size, the number of points of a colored point cloud, and data of the colored point cloud are stored as data of each frame. In addition, if a data set of obj ect data is a data set of mesh data, a data set class code is set as illustrated in Fig. 14B, and time information, a data size, the number of polygons, and data of each polygon are stored as data of each frame. In addition, if a data set of object data is a data set of a distance image, a data set class code is set as illustrated in Fig. 14C, and time information, a data size, the number of cameras, and data of each distance image are stored as data of each frame.

In this manner, by managing data for each subject and outputting the data, it is possible to shorten a time taken to designate a subject such as a player or a performer, for example, and read out an image centered on the designated subject. This is useful when an image centered on the motion of the designated player, or a virtual viewpoint image in which a subject is tracked from behind is generated. In addition, it also becomes possible to easily search for the designated player. In addition, a conversion unit 106 can convert a format from the format in which data is managed for each frame as illustrated in Figs. 4A to 9B, to a format in which data is managed for each subject as illustrated in Figs. 13 and 14A to 14C. Needless to say, the format can also be converted from the format illustrated in Figs. 13 and 14A to 14C, to the format illustrated in Figs. 4A to 9B.

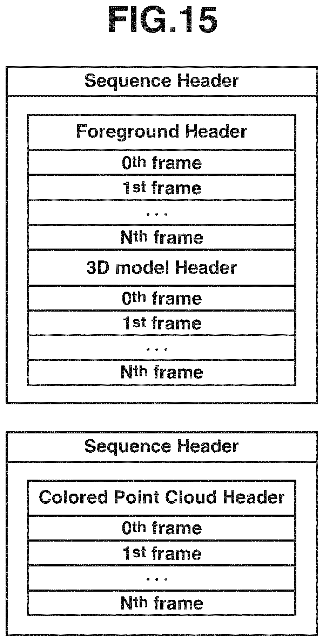

In addition, the acquisition unit 105 may acquire a sequence for each kind of material data as illustrated in Fig. 15. For example, in a case where material data pieces to be acquired by the acquisition unit 105 are foreground image data and point cloud data, as illustrated in Fig. 15, sequences of the foreground image data and the point cloud data are individually generated and stored into the storage unit 106. With this configuration, because sequences can be collectively output in accordance with a rendering method to be used by an output destination terminal, it becomes possible to promptly perform output. In addition, the conversion unit 107 can convert a format from a format in which material data pieces are combined into one sequence as illustrated in Figs. 3A to 3E, to a format in which a sequence is divided for each piece of material data as illustrated in Fig. 15. Needless to say, the format can also be converted from the format illustrated in Fig. 15, to the format illustrated in Figs. 3A to 3E. In addition, the conversion unit 107 may be configured to perform processing of adding predetermined information to a header of material data or the like in such a manner that an output destination apparatus can process the material data. In contrast, the conversion unit 107 may be configured to perform processing of deleting information such as metadata unnecessary for an output destination apparatus.

In addition, in the present exemplary embodiment, the description has been given assuming that the information processing apparatus 100 is an apparatus different from the material data generation unit 104 and the terminal 109, but the configuration is not limited to this. In other words, the information processing apparatus 100 may be integrated with an apparatus that generates material data, or an apparatus that acquires material data.

A case where the functions of the information processing apparatus 100 are included in a material data generation apparatus including the material data generation unit 104 will be described. In this case, the acquisition unit 105 and the conversion unit 107 can preliminarily identify the kind of material data to be generated. Accordingly, the conversion unit 107 performs conversion processing of material data referring to information for identifying material data processable by the terminal 109 that is acquired from the terminal 109, the table illustrated in Fig. 10A or 10B, and the like.

On the other hand, a case where the functions of the information processing apparatus 100 are included in an apparatus that acquires material data and performs processing related to the generation of a virtual viewpoint image will be described. For example, it is assumed that the functions of the information processing apparatus 100 are included in the terminal 109. In this case, the conversion unit 107 can preliminarily identify the format of material data processable by the terminal. Accordingly, the conversion unit 107 converts the format of material data acquired from a different apparatus, into the preliminarily-identified format of material data. At this time, by information for identifying the kind or the like of material data to be acquired (for example, a data set class code or the like), being added to material data, the conversion unit 107 can determine the type of conversion processing to be performed.

In addition, in the first exemplary embodiment, as information for identifying the format of material data processable by the terminal 109, unchanging information such as the type of the terminal has been mainly described, but the information is not limited to this. In other words, information for identifying the format of material data processable by the terminal 109 may be dynamically-changing information. For example, in a case where material data processable by the terminal 109 changes due to an increase in processing load or the like, the terminal 109 transmits information to the information processing apparatus 100 again. The information processing apparatus 100 can accordingly determine appropriate material data to be output to the terminal 109, and perform conversion processing. Furthermore, the information processing apparatus 100 may dynamically determine material data to be generated by conversion processing, in accordance with a change in a communication band of a communication path to the terminal 109.

### (Second Exemplary Embodiment)

In the first exemplary embodiment, the configuration of the system used in a case where the terminal 109 generates a virtual viewpoint image has been described. In the present exemplary embodiment, a configuration in which an information processing apparatus generates a virtual viewpoint image will be described. Because a hardware configuration of an information processing apparatus 200 according to the present exemplary embodiment is similar to that in the first exemplary embodiment, the description will be omitted. In addition, functional configurations similar to those in the first exemplary embodiment are assigned the same reference numerals, and the description will be omitted.

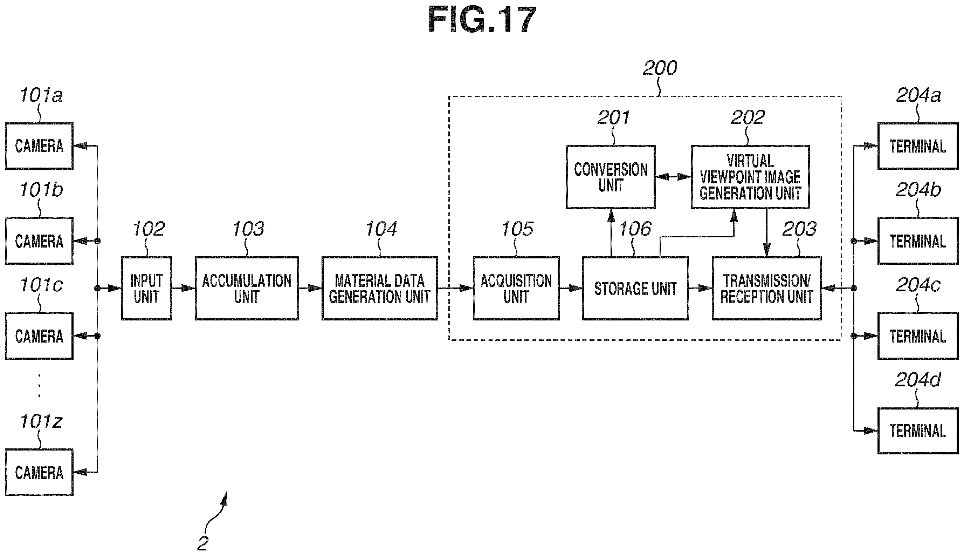

Fig. 17 is a diagram illustrating a configuration of a virtual viewpoint image generation system 2 including the information processing apparatus 200. In addition to components similar to those of the information processing apparatus 100 according to the first exemplary embodiment, the information processing apparatus 200 includes a conversion unit 201, a virtual viewpoint image generation unit 202, and a transmission/reception unit 203. Terminals 202a to 202d set a virtual viewpoint based on a user operation or the like, and transmit virtual viewpoint information indicating the position of the set virtual viewpoint and an eye direction from the virtual viewpoint, to the information processing apparatus 200. Terminals 204a to 204d do not include a function (renderer) of generating a virtual viewpoint image, and perform only the setting of a virtual viewpoint and the display of the virtual viewpoint image. In the following description, the terminals 204a to 204d will be simply described as terminals 204 in a case where there is no reason to distinguish the terminals 204a to 204d from each other.

The transmission/reception unit 203 receives virtual viewpoint information from the terminal 204, and transmits the virtual viewpoint information to the virtual viewpoint image generation unit 202. In addition, the transmission/reception unit 203 acquires, from the terminal 204, information for identifying the kind of a virtual viewpoint image to be output to the terminal 204. In addition, the transmission/reception unit 203 includes a function of transmitting a generated virtual viewpoint image to a terminal that has transmitted virtual viewpoint information. The virtual viewpoint image generation unit 202 generates a virtual viewpoint image based on the virtual viewpoint information and material data acquired from the storage unit 106 or the conversion unit 201. The virtual viewpoint image generation method that uses material data is similar to the method described in the first exemplary embodiment.

In accordance with the format of a virtual viewpoint image to be output to the terminal 204, the conversion unit 201 performs conversion of material data stored in the storage unit 106, by processing similar to the conversion processing in the first exemplary embodiment. For example, it is assumed that point cloud data and foreground image data are stored in the storage unit 106, and the terminal 204 being an output destination of a virtual viewpoint image displays a virtual viewpoint image generated based on colored mesh data. In this case, the conversion unit 201 converts the point cloud data and the foreground image data that are stored in the storage unit 106, into colored mesh data. The virtual viewpoint image generation unit 202 generates a virtual viewpoint image using the colored mesh data acquired by the conversion processing performed by the conversion unit 201, and outputs the virtual viewpoint image to the terminal 204 via the transmission/reception unit 203. In addition, for example, for example, it is assumed that, although point cloud data and foreground image data are stored in the storage unit 106, the terminal 204 cannot display a virtual viewpoint image generated using the point cloud data stored in the storage unit 106, due to the display capability. In this case, the conversion unit 201 determines the type of conversion processing of material data based on information regarding display capability that is acquired from the terminal 204. Here, it is assumed that the conversion unit 201 has determined that the terminal 204 can display a virtual viewpoint image generated by the resolution of point cloud data being converted into a lower resolution. The conversion unit 201 converts the resolution of the point cloud data stored in the storage unit 106, in such a manner as to decrease the resolution (increase a voxel size). The virtual viewpoint image generation unit 202 generates a virtual viewpoint image using material data obtained by the conversion processing performed by the conversion unit 201, and outputs the virtual viewpoint image to the terminal 204 via the transmission/reception unit 203.

In addition, the conversion unit 201 can also convert the format of a virtual viewpoint image generated by the virtual viewpoint image generation unit 202. At this time, the virtual viewpoint image generation unit 202 may use material data stored in the storage unit 106, or may use material data converted by the conversion unit 201. For example, it is assumed that the terminal 204 cannot display a virtual viewpoint image generated by the virtual viewpoint image generation unit 202 because the resolution of the virtual viewpoint image is higher than a predetermined resolution. In this case, the conversion unit 201 converts the format of the generated virtual viewpoint image in such a manner as to decrease the resolution of the virtual viewpoint image. In addition, it is assumed that an application or software for reproduction of a virtual viewpoint image that is to be used by the terminal 204 can only reproduce a virtual viewpoint image in a specific format. In this case, the conversion unit 201 converts the format of a generated virtual viewpoint image into a format of a virtual viewpoint image reproducible by the terminal 204. In addition, in a case where the terminal 204 is a head-mounted display (HMD), for example, the conversion unit 201 converts a generated virtual viewpoint image into an image for an HMD. In this manner, the conversion unit 201 can convert a virtual viewpoint image in accordance with the display capability of the terminal, the format of a virtual viewpoint image displayable by the terminal, the type of the terminal, and the like.

As described above, by the conversion unit 201 converting at least either of material data stored in the storage unit 106, and a virtual viewpoint image generated by the virtual viewpoint image generation unit 202, it is possible to output a virtual viewpoint image in an appropriate format to the terminal 204. The present exemplary embodiment can be executed in combination with the first exemplary embodiment. In other words, material data processable by an apparatus including a renderer may be output to the apparatus, and a virtual viewpoint image displayable by an apparatus not including a renderer may be output to the apparatus. Also in this configuration, the conversion unit executes conversion processing of converting the format of at least either of material data and a virtual viewpoint image in accordance with an output destination apparatus.

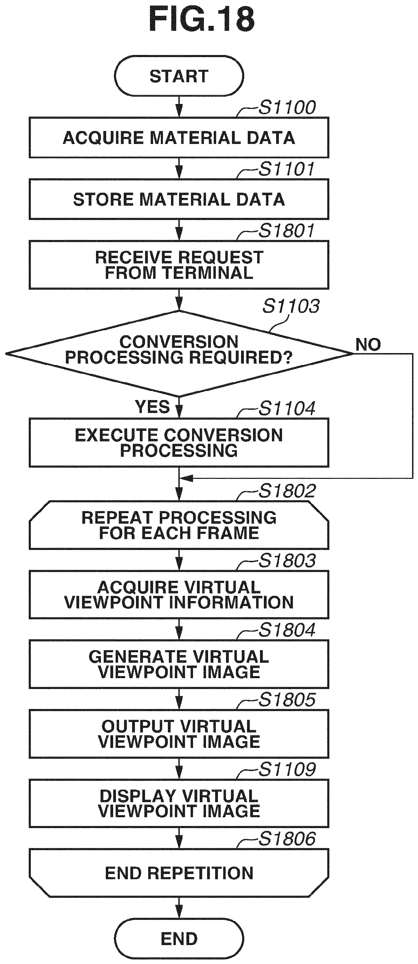

Processing to be performed by the information processing apparatus 200 and the terminal 204 will be described with reference to Fig. 18. Here, an example of processing to be performed in a case where the conversion unit 201 converts material data will be described. Processing steps similar to those in Fig. 11 are assigned the same step numbers, and the description will be omitted.

In step S1801, the transmission/reception unit 203 acquires, from the terminal 204, information for identifying the format of a virtual viewpoint image to be output to the terminal 204. The information to be acquired can be information similar to the information described in the first exemplary embodiment, for example. In steps S1103 and S1104, the conversion unit 201 performs conversion processing in accordance with the acquired information.

In step S1802, the virtual viewpoint image generation unit 202 and the terminal 204 repeatedly execute the processing in steps S1803 to S1109 for each frame of a virtual viewpoint image to be generated. In step S1803, the transmission/reception unit 203 acquires, from the terminal 204, virtual viewpoint information indicating the position of a virtual viewpoint and an eye direction from the virtual viewpoint. In addition, the transmission/reception unit 203 transmits the acquired virtual viewpoint information to the virtual viewpoint image generation unit 202. In step S1804, the virtual viewpoint image generation unit 202 generates a virtual viewpoint image based on material data obtained by the conversion processing performed by the conversion unit 201, and the virtual viewpoint information acquired from the transmission/reception unit 203. In step S1805, the transmission/reception unit 203 outputs the generated virtual viewpoint image to the terminal 204. In step S1109, the terminal 204 displays the virtual viewpoint image.

In step S1806, the information processing apparatus 200 determines whether to end the repetitive processing. For example, if the generation of a virtual viewpoint image ends in accordance with an instruction from the terminal or the like, the repetitive processing ends. By the above-described configuration, a virtual viewpoint image in an appropriate format is output in accordance with the terminal 204. In a case where the conversion unit 201 converts the format of a virtual viewpoint image, in the processing illustrated in Fig. 18, a step of conversion processing of a virtual viewpoint image is added after step S1804. The conversion processing of material data (steps S 1103 and S1104) is not essential in this case.

In the processing illustrated in Fig. 18, after conversion processing is performed in step S1104, the processing to be repeated for each frame of a virtual viewpoint image is performed, but a processing order is not limited to this. More specifically, the information processing apparatus 100 may read out material data stored in the storage unit 108, in accordance with acquired virtual viewpoint information, and generate a virtual viewpoint image by performing conversion processing. In this case, for example, the processing in steps S 1801 to S1104 in Fig. 18 is performed between steps S 1803 and S1804.

### (Other Exemplary Embodiments)

In the above-described first and second exemplary embodiments, the description has been given of an example in which material data is output to a terminal that displays a virtual viewpoint image, but an output destination apparatus is not limited to this. For example, even in a case where material data is output to a different apparatus that acquires the material data and performs predetermined processing, the above-described exemplary embodiments are applicable. In this case, based on information for identifying the format of material data processable by the output destination different apparatus, the information processing apparatus 100 determines material data to be output to the different apparatus, and performs conversion processing of the material data.

The present disclosure can also be implemented by processing of supplying a program for implementing one or more functions of the above-described exemplary embodiments, to a system or an apparatus via a network or a storage medium, and one or more processors in a computer of the system or the apparatus reading out and executing the program. In addition, the present disclosure can also be implemented by a circuit (for example, an application specific integrated circuit (ASIC)) for implementing the one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2021-024136, filed February 18, 2021, which is hereby incorporated by reference herein in its entirety.

## Claims

1. An information processing apparatus comprising:
an acquisition unit configured to acquire material data that is to be used for generation of a virtual viewpoint image that is based on a plurality of captured images obtained by a plurality of imaging apparatuses performing image capturing of a subject, and is material data represented by a first format;
a conversion unit configured to convert, based on information for identifying a format of material data processable by a different apparatus being an output destination of the material data, a format of the material data acquired by the acquisition unit, from the first format into a second format; and
an output unit configured to output the material data converted into the second format by the conversion unit, to the different apparatus.

2. The information processing according to Claim 1, wherein a format of material data to be converted by the conversion unit is a format for identifying a kind of material data.

3. The information processing apparatus according to Claim 1 or 2, wherein the information includes information regarding a type of the different apparatus.

4. The information processing apparatus according to any one of Claims 1 to 3, wherein the information includes information regarding processing capability of the different apparatus.

5. The information processing apparatus according to any one of Claims 1 to 4, wherein the information includes information regarding a generation method of a virtual viewpoint image that is to be used by the different apparatus.

6. The information processing apparatus according to any one of Claims 1 to 5, wherein the information includes information regarding a format of a virtual viewpoint image displayable by the different apparatus.

7. The information processing apparatus according to any one of Claims 1 to 6, further comprising a generation unit configured to generate a virtual viewpoint image represented by a third format, based on material data acquired by the acquisition unit,
wherein the conversion unit converts a format of the virtual viewpoint image generated by the generation unit, from the third format into a fourth format.

8. An information processing apparatus comprising:
an acquisition unit configured to acquire material data that is to be used for generation of a virtual viewpoint image that is based on a plurality of captured images obtained by a plurality of imaging apparatuses performing image capturing of a subject, and is material data obtained by converting a format of material data represented by a first format, from the first format into a second format based on information for identifying a format of material data processable by the information processing apparatus; and
a generation unit configured to generate a virtual viewpoint image based on the material data acquired by the acquisition unit.

9. The information processing apparatus according to Claim 8, wherein the information includes information regarding a type of the information processing apparatus.

10. The information processing apparatus according to Claim 8 or 9, wherein the information includes information regarding processing capability of the information processing apparatus.

11. The information processing apparatus according to any one of Claims 8 to 10, wherein the information includes information regarding a generation method of a virtual viewpoint image that is to be used by the information processing apparatus.

12. The information processing apparatus according to any one of Claims 8 to 11, wherein the information includes information regarding a format of a virtual viewpoint image displayable by the information processing apparatus.

13. The information processing apparatus according to any one of Claims 1 to 12, wherein material data represented by the second format is data including point cloud data indicating a three-dimensional shape of the subject, and texture data indicating a color of the subject.

14. The information processing apparatus according to any one of Claims 1 to 12, wherein material data represented by the second format is data including point cloud data indicating a three-dimensional shape of the subject and a color of the subject.

15. The information processing apparatus according to any one of Claims 1 to 12, wherein material data represented by the second format is data including mesh data indicating a three-dimensional shape of the subject and a color of the subject.

16. The information processing apparatus according to any one of Claims 1 to 12, wherein material data represented by the second format is data including mesh data indicating a three-dimensional shape of the subject, and texture data indicating a color of the subject.

17. The information processing apparatus according to any one of Claims 14 to 16, wherein material data represented by the first format is data including point cloud data indicating a three-dimensional shape of the subject, and texture data indicating a color of the subject.

18. The information processing apparatus according to Claim 16, wherein material data represented by the first format is data including point cloud data indicating a three-dimensional shape of the subject and a color of the subject.

19. The information processing apparatus according to any one of Claims 13 to 15, wherein material data represented by the first format is data including mesh data indicating a three-dimensional shape of the subject, and texture data indicating a color of the subject.

20. The information processing apparatus according to Claim 14, wherein material data represented by the first format is data including mesh data indicating a three-dimensional shape of the subject and a color of the subject.

21. The information processing apparatus according to any one of Claims 1 to 20, wherein a format of the material data is a format regarding information for identifying a data amount of material data.

22. The information processing apparatus according to Claim 21, wherein the information for identifying a data amount of material data includes information regarding a resolution of the material data.

23. The information processing apparatus according to Claim 21 or 22, wherein the information for identifying a data amount of material data includes information regarding a frame rate of the material data.

24. An information processing method comprising:
acquiring material data that is to be used for generation of a virtual viewpoint image that is based on a plurality of captured images obtained by a plurality of imaging apparatuses performing image capturing of a subject, and is material data represented by a first format;
converting, based on information for identifying a format of material data processable by a different apparatus being an output destination of the material data, a format of the material data acquired in the acquiring, from the first format into a second format; and
outputting the material data converted into the second format in the converting, to the different apparatus.

25. A program for causing a computer to function as the information processing apparatus according to any one of Claims 1 to 23.
